# EUROPEAN PATENT APPLICATION

(11) **EP 1 421 998 A1**
(43) Date of publication of application: **26.05.2004**
(21) Application number: 02733456.4
(22) Date of filing: 11.06.2002
(51) Int. Cl.: B06B 1/04

(54) **VIBRATING ACTUATOR DEVICE**

(30) Priority: 11.06.2001 JP 2001175988
(71) Applicant: NAMIKI SEIMITSU HOUSEKI KABUSHIKI KAISHA, Tokyo 123-8511 (JP)
(72) Inventor: KANEDA, Shoichi c/o NAMIKI SEIMITSU, Adachi-ku, Tokyo 123-8511 (JP); KYONO, Tsuneo c/o NAMIKI SEIMITSU, Adachi-ku, Tokyo 123-8511 (JP); UEDA, Minoru c/o NAMIKI SEIMITSU, Adachi-ku, Tokyo 123-8511 (JP)
(74) Representative: Sties, Jochen, Dipl.-Ing.
(86) International application number: PCT/JP2002/005773
(87) International publication number: WO 2002/100561

(57) **Abstract**

There is a roughly rectangular housing that is narrower in one direction, with a pair of suspensions having two arms that are located in the narrow space of the housing and attach to the main part that supports the electromagnetic circuit and that extend gradually outward from the attachment on the main part of the suspension in the same or crossing directions, with the tips of the two arms of each suspension set in the narrow walls of the housing, such that the electromagnetic circuit can vibrate in the two suspensions.

## Description

### FIELD OF INDUSTRIAL USE

This invention is an improvement to a vibrating actuator mechanism that has the function of generating vibrations, as well as the sound functions of generating voice signals and buzzer sounds.

### PRIOR TECHNOLOGY

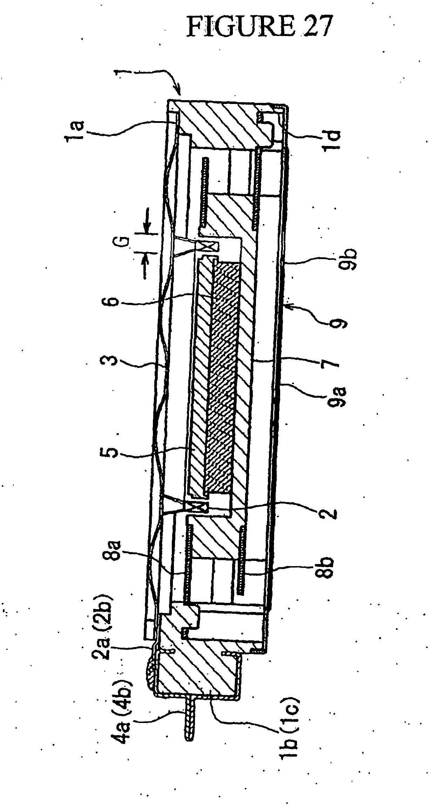

Vibrating actuator devices are generally constituted as shown in figure 27, with a cylindrical housing 1 as a frame, a diaphragm 3 that has a voice coil 2 attached to its inner surface with voice coil 2 lead wires 2a (2b) extending to the outside of the housing 1, the diaphragm 3 being fitted and fixed into the open end 1a of the housing 1 and the voice coil 2 lead wires 2a (2b) being fixed by soldering to terminal fittings 4a (4b) of the terminal seats 1b (1c) that project outward from the side wall of the housing 1, with terminal fittings 4a (4b) serve as power feed terminals of electrical circuit.

To the electrical circuit, the vibrating device has a magnet 6 which is fixed a pole piece 5, a yoke 7 that holds the magnet 6 together with the pole piece 5 separated from the pole piece 5 by a magnetic gap G. The yoke 7 is incorporated within the housing 1 and supported by thin-sheet suspensions 8a, 8b, and the voice coil 2 is inserted into the magnetic gap G between the pole piece 5 and the yoke 7, thus forming the magnetic circuit. Further, a cap 9 pierced with multiple sound holes 9a, 9b ... covers the open end 1d of the housing 1.

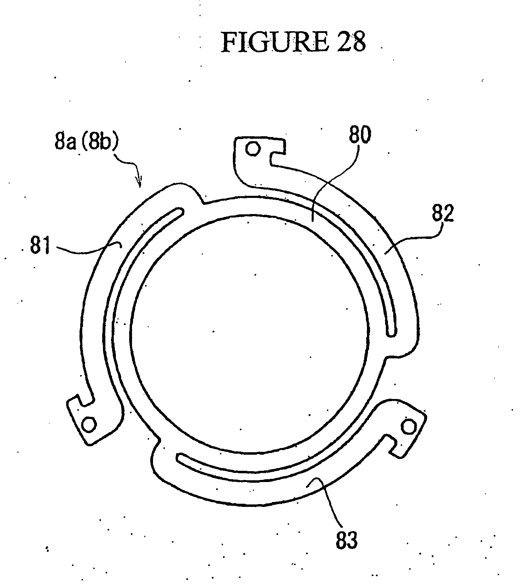

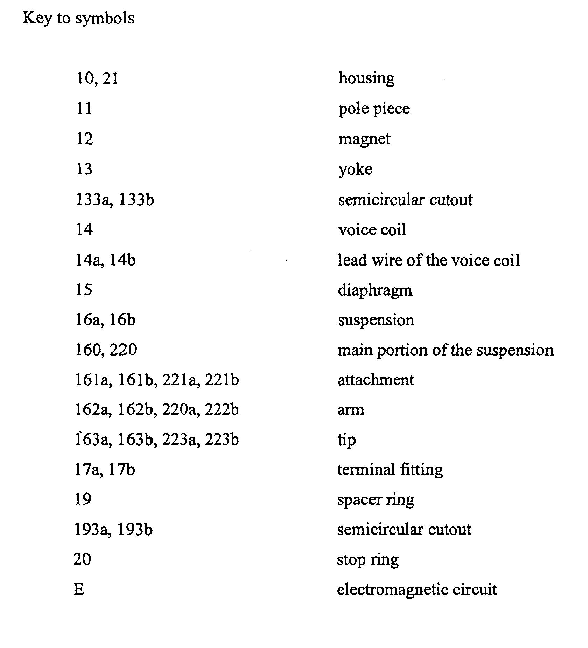

Within the constitution of this vibrating actuator device, the two suspensions 8a (8b) that support the magnetic circuit are formed in a roughly circular disk shape, with a central inner ring 80 that is fitted and fixed to the outer periphery of the yoke, as shown in figure 28, and three arms 81 to 83 that extend outward, at equal intervals, around the outer periphery of the inner ring 80.

Depending on the type of equipment in which this vibrating actuator device is mounted, and in connection with the mounting space within the external case of the equipment, the device must be assembled in a roughly rectangular housing that is relatively narrow in one direction. In assembling this vibrating actuator device, the suspensions described above have an external shape that is roughly circular and large, and so is difficult to assemble in a housing that is roughly rectangular and relatively narrow in one direction.

This invention is focused primarily on the shape of the suspensions and the assembly structure, and has the purpose of providing a vibrating actuator device that can be assembled in the magnetic circuit that is stable and has good vibration characteristics, even though the housing is roughly rectangular and relatively narrow in one direction.

In addition, this invention has the purpose of providing a vibrating actuator device that can be assembled in such a way that the lead wires of the voice coil are arranged in a stable manner and breakage of the lead wires can be prevented.

Moreover, this invention has the purpose of providing a vibrating actuator device that has a sturdy magnetic circuit and that can be assembled in such a way that it can display good vibration characteristics.

Further, this invention has the purpose of providing a vibrating actuator device that can be assembled in such a way that the width of the housing does not spread and good shock resistance is available.

In addition to the above, this invention has the purpose of providing a vibrating actuator device that has a magnetic circuit that maintains an even weight balance, and that can be assembled in such a way that it can display good vibration characteristics.

### DESCRIPTION OF INVENTION

The vibrating actuator mechanism relating to claim 1 of this invention is one that has a housing in the form of a surrounding wall, an electromagnetic circuit with a magnetic gap between a pole piece and a yoke that holds a magnet that is integral with the pole piece, a diaphragm with a voice coil attached to its inner surface, a pair of facing leaf-spring suspensions that support the electromagnetic circuit that are set inside wall of the housing such that the electromagnetic circuit is able to vibrate, the diaphragm being set inside the wall of the housing such that the voice coil is inserted into the magnetic gap and is electrically connected to terminal fittings outside the wall of the housing by lead wires that lead out of the housing, in which there is a rectangular housing that is narrower in one direction, each of the suspensions having two arms that are located in the narrow space of the housing and the suspensions attach with main part that supports the electromagnetic circuit and the arms that extend gradually outward from attachment on the main part of the suspension, with the suspensions assembled on the electromagnetic circuit with their arms extending in the same directions and tips of the two arms of each suspension set the walls of narrow width of the housing, such that the electromagnetic circuit can vibrate in the two suspensions.

The vibrating actuator mechanism relating to claim 2 of this invention is one in which the suspensions are attached to the electromagnetic circuit with the same direction of extension for the arms of the two suspensions and the arm attachments in facing positions, and with the tips of the two arms of each suspension set in seats near the comers of the sides of the narrow widths of the housing, such that the electromagnetic circuit can vibrate in the two suspensions.

The vibrating actuator mechanism relating to claim 3 of this invention is one in which the suspensions are attached to the electromagnetic circuit with the same direction of extension for the arms of the two suspensions and the arms of the two suspensions offset in degree of rotation relative to a perpendicular centerline through the suspension, and with the tips of the arms of the two suspensions set in different positions in the narrow walls of the housing, such that the electromagnetic circuit can vibrate in the two suspensions.

The vibrating actuator mechanism relating to claim 4 of this invention is one in which there are two suspensions having different vibration characteristics.

The vibrating actuator mechanism relating to claim 5 of this invention is one that has a housing that is narrower in one direction with a roughly elliptical, track-shaped inner wall, with grooves in the edge of the narrow wall of the housing to accommodate the lead wires of the voice coil and the voice coil lead wires from the edge of the diaphragm being laid in the grooves and connected to the terminal fittings.

The vibrating actuator mechanism relating to claim 6 of this invention is one that has a yoke that comprises a flat elliptical receptacle with a U-shaped cross section within which is a magnet that is fixed to and integral with a pole piece and a peripheral flange that extends out from the open edge of the receptacle; two suspensions each formed of a circular main part and two arms, which are fitted around the outer periphery of the receptacle in the order of first suspension, spacer ring, and second suspension, after which a stop ring is fitted over the receptacle to hold the second suspension in place to form an electromagnetic circuit assembled as a unit with the outer flange of the yoke, the stop ring and two suspensions.

The vibrating actuator mechanism relating to claim 7 of this invention is one in which the electromagnetic circuit is assembled in the housing by assembling a spacer ring that projects stopper outward from the position corresponding to the outside, and the stopper used to control lateral vibration together with the yoke, the suspensions, and the stop ring with linear edges on the outer edge corresponding to the projection base of the stopper, and then accommodating the stopper of the spacer ring in a concavity in the inner surface of the wall on the long side of the housing.

The vibrating actuator mechanism relating to claim 8 of this invention is one in which the electromagnetic circuit has a spacer ring and a yoke with matching semicircular cutouts on the outer edges, and is assembled by determining the position with the support pin of an assembly jig that fits the cutout edges of the yoke and spacer ring, and placing the suspensions and the spacer ring around the yoke.

The vibrating actuator mechanism relating to claim 9 of this invention is one that has a housing in the form of a surrounding wall, an electromagnetic circuit with a magnetic gap between a pole piece and a yoke that holds a magnet that is integral with the pole piece, a diaphragm with a voice coil attached to its inner surface, a pair of facing leaf-spring suspensions that support the electromagnetic circuit that are set inside wall of the housing such that the electromagnetic circuit is able to vibrate, the diaphragm being set inside the wall of the housing such that the voice coil is inserted into the magnetic gap and is electrically connected to terminal fittings outside the wall of the housing by lead wires that lead out of the housing, in which there is a housing that is narrower in one direction, two suspensions having main part that supports the electromagnetic circuit and attachment on the main part and two arms that are located in the narrow space of the housing, and the attachments attached symmetrically on the main part and the arms that extend outward from the attachment on the main part of the suspension in opposite directions, and the suspensions assembled on the electromagnetic circuit with their arms crossing in opposite directions and the tips of the two arms of each suspension set in the narrow walls of the housing, such that the electromagnetic circuit can vibrate in the two suspensions.

The vibrating actuator mechanism relating to claim 10 of this invention is one that has a housing that is narrower in one direction with a roughly elliptical, track-shaped inner wall, with grooves in the edge of the narrow wall of the housing to accommodate the lead wires of the voice coil and the voice coil lead wires from the edge of the diaphragm being laid in the grooves and connected to the terminal fittings.

The vibrating actuator mechanism relating to claim 11 of this invention is one in which there are two suspensions having different vibration characteristics.

The vibrating actuator mechanism relating to claim 12 of this invention is one that has a yoke that comprises a flat elliptical receptacle with a U-shaped cross section within which is a magnet that is fixed to and integral with a pole piece and a peripheral flange that extends out from the open edge of the receptacle; two suspensions each formed of a circular main part and two arms, which are fitted around the outer periphery of the receptacle in the order of first suspension, spacer ring, and second suspension, after which a stop ring is fitted over the receptacle to hold the second suspension in place to form an electromagnetic circuit assembled as a unit with the outer flange of the yoke, the stop ring and two suspensions.

The vibrating actuator mechanism relating to claim 13 of this invention is one in which the electromagnetic circuit is assembled in the housing by assembling a spacer ring that projects stopper outward from the position corresponding to the outside, and the stopper used to control lateral vibration together with the yoke, the suspensions, and the stop ring with linear edges on the outer edge corresponding to the projection base of the stopper, and then accommodating the stopper of the spacer ring in a concavity in the inner surface of the wall on the long side of the housing.

The vibrating actuator mechanism relating to claim 14 of this invention is one in which the electromagnetic circuit has a spacer ring, suspensions and a yoke with matching semicircular cutouts on the outer edges, and is assembled by determining the position with the support pin of an assembly jig that fits the cutout edges of the yoke, the suspensions, and spacer ring, and placing the suspensions and the spacer ring around the yoke.

### BRIEF EXPLANATION OF THE DRAWINGS

Figure 1 is a cross section (taken along line A-D-D of figure 3) that shows, from the long side, the internal constitution of the vibrating actuator device of the first example of implementation of this invention.

Figure 2 is a cross section that shows, from the short side, the internal constitution of the vibrating actuator device in figure 1.

Figure 3 is a plane view, from the diaphragm side, of the vibrating actuator device in figure 1.

Figure 4 is a plane view, from the yoke side, of the vibrating actuator device in figure 1.

Figure 5 is an oblique view of one example of the suspensions in the constitution of the vibrating actuator device in figure 1.

Figure 6 is an oblique view of an example, different from that in figure 5, of the suspensions in the constitution of the vibrating actuator device in figure 1.

Figure 7 is an explanatory detail that shows the seat for the suspensions in figure 5.

Figure 8 is an explanatory detail that shows the spacer piece used in assembly of the suspensions in figure 6.

Figure 9 is a plane view, from the yoke side, of the vibrating actuator device in a mode that differs from the first example of implementation of this invention.

Figure 10 is an oblique view of the suspensions in the constitution of the vibrating actuator device in figure 9.

Figure 11 is a plane view of the yoke in the constitution of the electromagnetic circuit of this actuator device.

Figure 12 is a cross section taken along line A-A of the yoke in figure 11.

Figure 13 is a cross section taken along line B-B of the yoke in figure 11.

Figure 14 is a plane view of the suspension spacer ring in the constitution of this actuator device.

Figure 15 is a cross section taken along line A-A of the spacer ring in figure 14.

Figure 16 is a cross section taken along line B-B of the spacer ring in figure 14.

Figure 17 is a plane view of the suspension stop ring in the constitution of this actuator device.

Figure 18 is a side view of a terminal fitting in the constitution of this actuator device.

Figure 19 is an explanatory detail that shows the assembly of the vibrating actuator device with the terminal fitting in figure 18 into the equipment.

Figure 20 is a cross section that shows, from the long side, the internal constitution of the vibrating actuator device of a second example of implementation of this invention.

Figure 21 is a plane view, from the yoke side, of the vibrating actuator device of figure 20.

Figure 22 is a plane view of the housing in the constitution of the vibrating actuator device of figure 20.

Figure 23 is a plane view of one of the springs making up the double suspension in the constitution of the vibrating actuator device of figure 20.

Figure 24 is a plane view of the other of the springs making up the double suspension in the constitution of the vibrating actuator device of figure 20.

Figure 25 is a plane view that shows another example of the yoke.

Figure 26 is a cross section taken along line C-C of the yoke in figure 25.

Figure 27 is a cross section of a conventional vibrating actuator device.

Figure 28 is a plane view of one example of the suspension assembled in the conventional vibrating actuator device of figure 27.

### OPTIMUM MODE OF IMPLEMENTATION OF INVENTION

### <First Example Of Implementation>

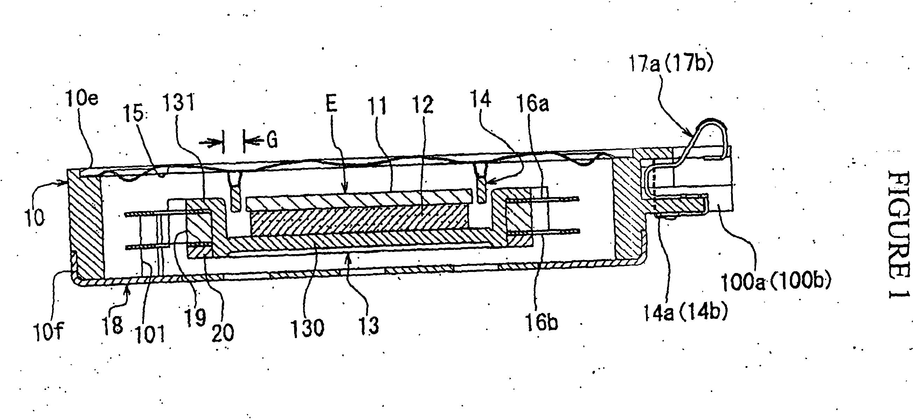

The following explanation refers to figures 1 to 19. The vibrating actuator device of the example of implementation illustrated is of the floating type in which the electromagnetic circuit is made to vibrate by the reaction force against the force generated by the voice coil. By impressing on the voice coil a vibration signal that matches the resonant frequency of the electromagnetic circuit the electromagnetic circuit is made to vibrate at a frequency of 130 to 140 Hz and perform as a vibrator, and impressing a signal with a frequency of 800 Hz to 4 kHz makes just the diaphragm oscillate to perform the electro-kinetic function type of reproducing a call signal or communicant voice.

This vibrating actuator device is constituted in inverted form so that when it is mounted in a portable telephone or other equipment, the cap mounting side where there is little flux leakage faces the outside of the telephone case or the other equipment case, and the diaphragm mounting side where there is greater flux leakage faces the substrate of the circuit board. Further, the voice coil lead wires are run from the diaphragm mounting side to the cap mounting side so that the solder mound that electrically connects and fixes the voice coil lead wires to the terminal fittings does not interfere with contact between the terminal fittings and the power supply lands of the circuit board.

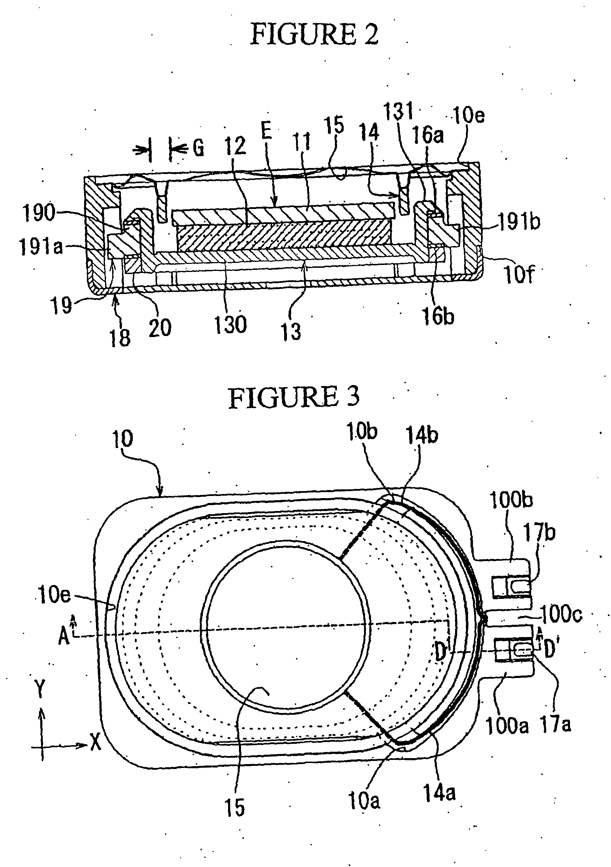

This basic mode is constituted with the framework of a housing 10 which is a surrounding wall as shown in figures 1 and 2, within which are found an electromagnetic circuit E in which a yoke 13 supports a magnet 12 to which a pole piece 11 if fixed as a single unit so that a magnetic gap G is maintained between the yoke 13 and the pole piece 11, and a diaphragm 15 that has a voice coil 14 attached to its inner surface. The electromagnetic circuit E is supported with a double suspension structure consisting of two suspensions 16a, 16b, and each of the suspensions 16a, 16b is stretched between the inner surfaces of the walls of the housing 10.

The diaphragm 15 is stretched within the walls of the housing 10 with the voice coil 14 inserted into the magnetic gap G; the lead wires 14a (14b) that lead out of the housing 10 from the voice coil 14 are electrically connected to the terminal fittings 17a (17b) that are found outside the wall of the housing 10, and a cap 18 that is perforated with a number of openings covers the open end of the housing 10.

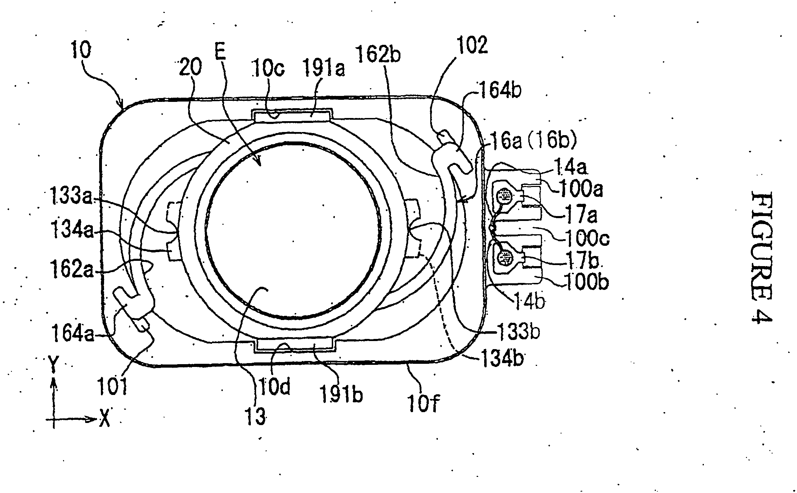

As shown in figures 3 and 4, the housing 10 is of normal width in one direction (hereafter "the long side (X direction)") in connection with vibration transmission efficiency, but is relatively narrow in the other direction (hereafter "the short side (Y direction)") in connection with the space for mounting, and the inner periphery has the shape of a roughly elliptical track. On this housing 10, terminal fittings 17a, 17b are mounted on terminal seats 100a, 100b separated by a central slit 100c for use as positive and negative poles and provided on the outer housing 10.

There are on this housing 10 concave grooves 10a, 10b in the wall on the narrow side, through which the lead wires 14a, 14b of the voice coil 14 are laid. These concave grooves 10a, 10b run in an arc from the inner periphery of the housing 10 and connect to the slit 100c of the terminal seats 100a, 100b. There are also, on the inside walls on the long side (X direction), concavities 10c, 10d that receive projecting stoppers on the spacer ring to prevent lateral vibration, as described hereafter.

In addition, in the space on the narrow side of the housing 10 there are seats in the inner wall for attachment of the suspensions to be described hereafter. Around the inner edge of the wall there is a step 10e (see figure 1) into which the outer edge of the mounting side of the diagram 15 is fitted. The outer edge of the wall on the covered side also has a step 10f that fits with the standing rim of the cap 18.

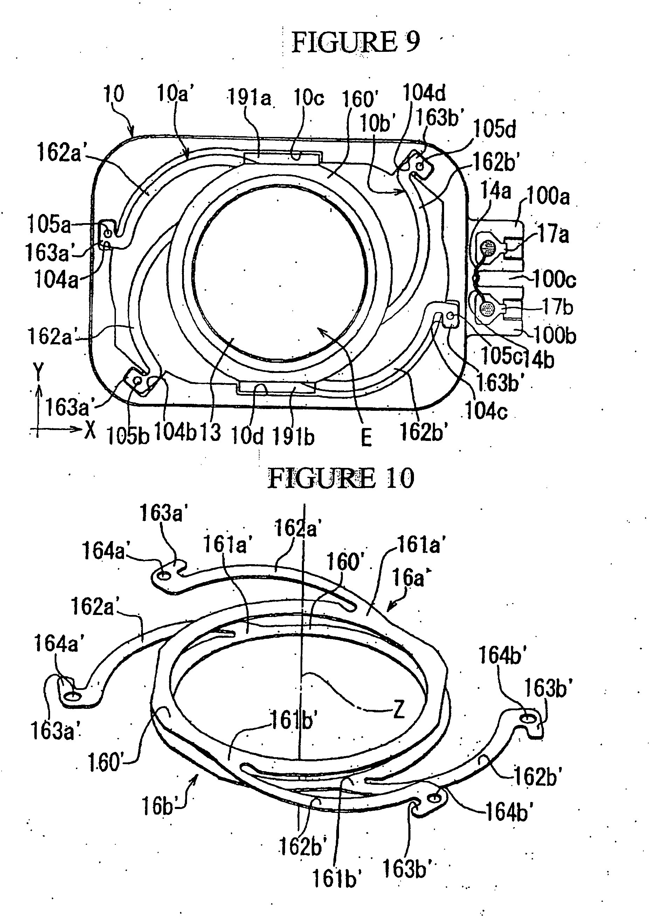

The electromagnetic circuit E that is accommodated inside this housing 10 has a spacer ring 19 and a stop ring 20 as shown in figures 1 and 2, and is supported by a double suspension structure that has two suspensions that fit around the outside of the yoke 13. This double suspension structure includes suspensions 16a, 16b as shown in figures 4, 5 and 6, or another suspensions 16a', 16b' as shown in figures 9 and 10.

Each suspension 16a, 16b or 16a', 16b' (corresponding components of both structures will be keyed with the same codes hereafter) are located within the space of the short side (Y direction) of the housing 10 as common structures; has attachments 161a, 161b, 161a', 161 b' in symmetrical positions that connect with the outer edge of the circular main portions 160, 160' that support the electromagnetic circuit E; has two arms 162a, 162b, 162a', 162b' that become gradually more distant from the main parts 160, 160' as they extend away from the attachments 161a, 161b, 161a', 161b'; has tips 163a, 163b, 163a', 163b' on the arms 162a, 162b, 162a', 162b' that attach to the walls of the housing 10; and is made of leaf spring material.

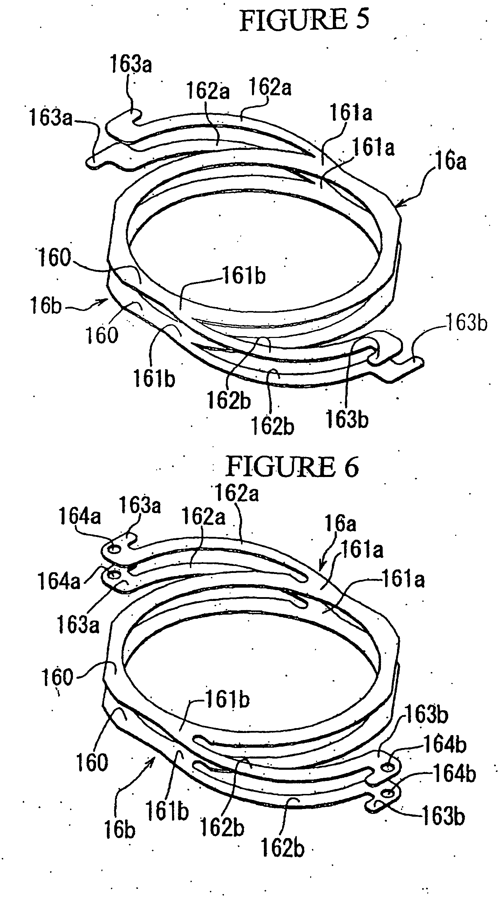

As shown in figure 5, the suspensions 16a, 16b have arms 162a, 162b that extend in the same direction and are assembled on the electromagnetic circuit E with the attachments 161a, 161b in corresponding positions. The tips 163a, 163b of the corresponding arms 162a, 162b of the suspensions 16a, 16b are assembled by fitting into narrow seats near the comers of the sides of different width of the housing 10. The tips 163a, 163b of the arms 162a, 162b of the suspensions 16a, 16b can face opposite directions (see figure 5) or they can face the same direction (see figure 6).

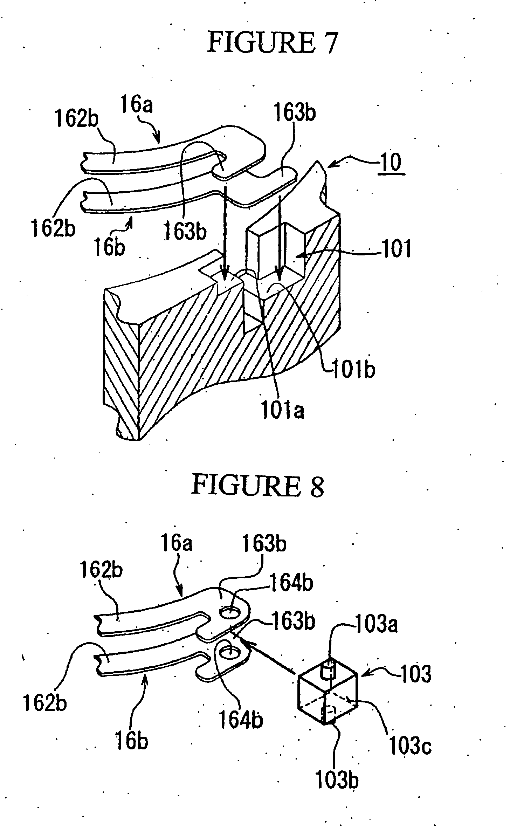

The suspensions 16a, 16b shown in figure 5 fit into the two steps 101a, 101b of the narrow seats 101 (102) near the comer of the sides of different widths of the housing 10, as shown in figure 7, and the tips 163a, 163 b of arms 162a, 162b that face in different directions on the same side are installed by fixing each by adhesion to the appropriate step 101a, 101b.

For the suspensions 16a, 16b shown in figure 6 there is a spacer piece 103 that has stop pins 103a, 103b rising from the spacer block 103c, as shown in figure 8, and the stop pins 103a, 103b are fitted into the stop holes 164a, 164b formed in the tips 163a, 163b located on the same sides of the arms 162a, 162b. By this means the spacer block 103c, intervening between the tips 163a, 163b, is placed into a seat (not illustrated) near the comer of the sides of different widths of the housing 10 and adhered.

The suspensions 16a', 16b', as shown in figures 9 and 10, have arms 162a', 162b' that extend in the same direction with the arms 162a', 162b' offset by rotation around perpendicular centerline Z through the suspensions 16a', 16b', and are assembled on the electromagnetic circuit so that the tips 163a', 163b' of the arms 162a', 162b' can be installed in different positions along the narrow wall of the housing.

The suspensions 16a', 16b' have stop holes 164a', 164b' in the tips 163a', 163b' of the arms 162a', 162b', and the tips 163a', 163b' of the arms 162a', 162b' fit into seats 104a, 104b, 104c, 104d of different depths in the inner walls of the housing 10. Stop pins 105a, 105b, 105c, 105d that project from the center of the bottom of seats 104a, 104b, 104c, 104d fit and fasten the stop holes 164a', 164b'; The suspensions 16a', 16b' are fastened at different locations in the narrow wall of the housing 10 by means of these stop pins.

The suspensions 16a, 16b, 16a', 16b' can be given different vibration characteristics in order to prevent the energy from vibration of the electromagnetic circuit E from being lost in the arms 162a, 162a, 162b, 162b, 162a', 162a', 162b' 162b'. It is possible when assembling the suspensions 16a, 16b, 16a', 16b' to have either arms 162a, 162b or arms 162a', 162b' of one suspension 16a or 16a' adhered firmly at the tips 163a, 163b or 163a', 163b', while the tips 163a, 163b or 163a', 163b' of arms 162a, 162b or 162a', 162b' of the other suspension 16b or 16b' is attached more flexibly.

Otherwise, it is possible to have one metallic suspension and the other suspension based on a polymer or paper material, or to have both suspensions of the same material but vary the thickness or shape of the suspensions or their arms, and thus have two suspensions with different vibration characteristics.

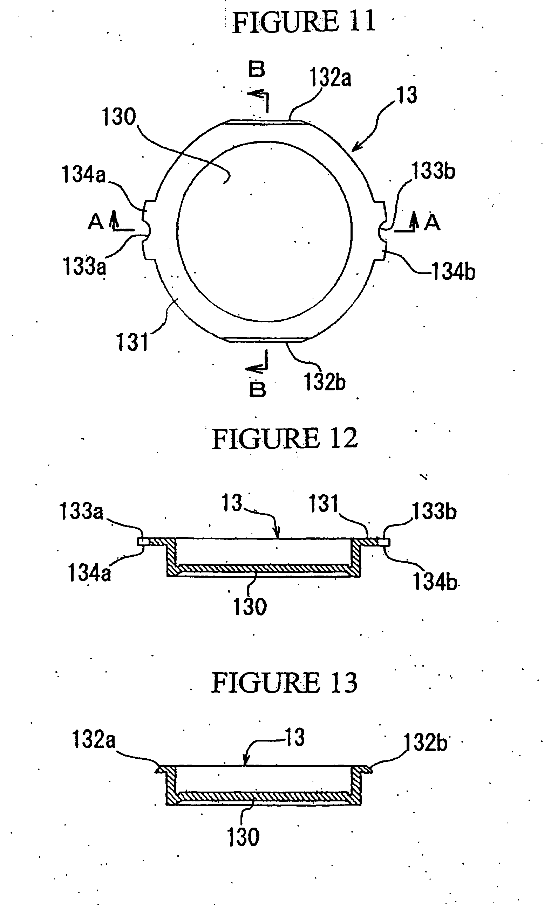

The yoke 13 that is the base for the electromagnetic circuit E, as shown in figures 11 through 13, is made up of a flat receptacle with a concave cross section within which is fixed a magnet 12 that includes a circular pole piece 11, an outer flange 131 that extends from the open edge of the receptacle 130. The outer edge of this yoke 13 is cut out to match the projections of stoppers 191a, 191b on a spacer ring 19, and the straight cut edges 132a, 132b are beveled. There are also projecting pieces 134a, 134b with semi-circular cutouts 133a, 133b which are positioned by support pins of the assembly jig during assembly of the electromagnetic circuit.

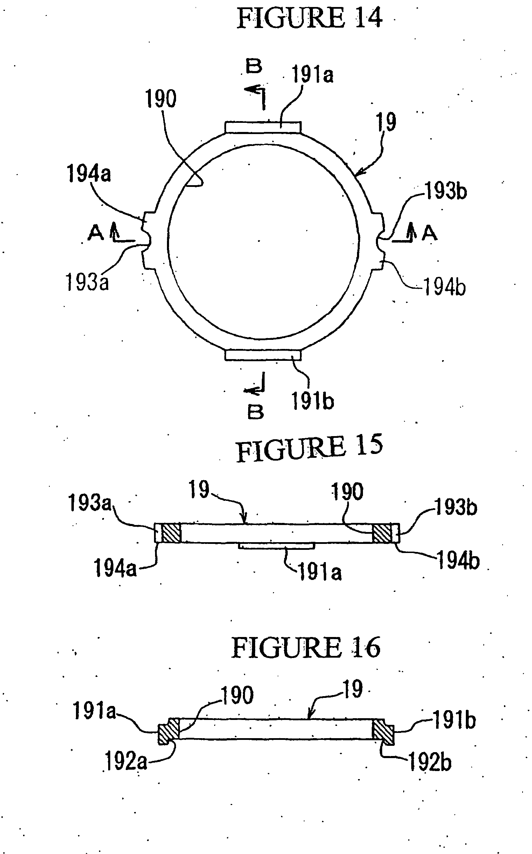

The spacer ring 19 sandwiched between the suspensions 16a, 16b, as shown in figures 14 through 16, is formed with a ring base 190 of the desired thickness, and stoppers 191a, 191b to control lateral vibration that project from the sides of the ring base 190 corresponding to the long sides of the housing (the X direction). These stoppers 191a, 191b are formed with steps 192a, 192b that engage one of the suspensions by rising an amount corresponding to the thickness of the suspension. The projecting pieces 194a, 194b with semi-circular cutouts 193a, 193b which are positioned by support pins of the assembly jig during assembly of the electromagnetic circuit, extend in the direction of the short sides of the housing (the Y direction).

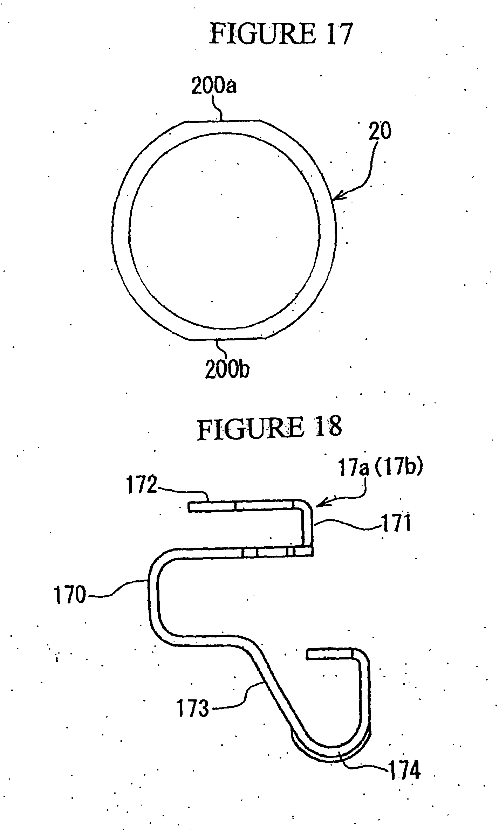

The stop ring 20 of the suspension 16b is shaped like an O ring, except that it has straight-line cutouts 200a, 200b on the outer edge that correspond to the stopper projections of the of the spacer ring, as shown in figure 17. This stop ring 20, like other structural parts, can have semi-circular cutouts to be positioned by support pins of the assembly jig during assembly of the electromagnetic circuit.

These structural parts are assembled firmly on the electromagnetic circuit E in the example of implementation shown in figures 1 and 2 by fitting the first suspension 16a around the outside of the receptacle 130 until it is in contact with the outer flange 131, then adding the spacer ring 19 and the second suspension 16b in that order, then fitting the stop ring 20 around the outside of the receptacle 130 to hold the second suspension 16b in place, so that the two suspensions are assembled firmly as a single unit between the outer flange 131 of the yoke 13 and the stop ring 20.

When the first suspension 16a, spacer ring 19 and second suspension 16b are fitted in order on the receptacle 130 of the yoke 13, support pins of an assembly jig (not illustrated) are used to align the semicircular cutouts 133a, 133b, 193a, 193b on the various structural parts in the proper positions. By this means it is possible to assemble the structural parts while maintaining an even weight balance overall, even if the structural parts are not circular in shape.

When this electromagnetic circuit E is installed within the housing 10, the electromagnetic circuit E is supported by a double suspension structure consisting of two suspensions 16a, 16b that are fitted around the outside of the yoke 13 along with the spacer ring 19 and the stop ring 20 as described above, and the tips 163a, 163b of the arms 162a, 162b are attached inside the walls of the short sides (the Y direction) of the housing 10.

At this stage of assembly of the electromagnetic circuit E, the stoppers 191a, 191b on the spacer ring 19 are accommodated, with a gap, in the concavities 10c, 10d on the inside walls on the long sides (the X direction) of the housing 10. Because the linear edges 132a, 132b, 200a, 200b are formed on the yoke 13 and stop ring 20 corresponding to these projections, the stoppers 191a, 191b can be assembled as designated within the concavities 10c, 10d.

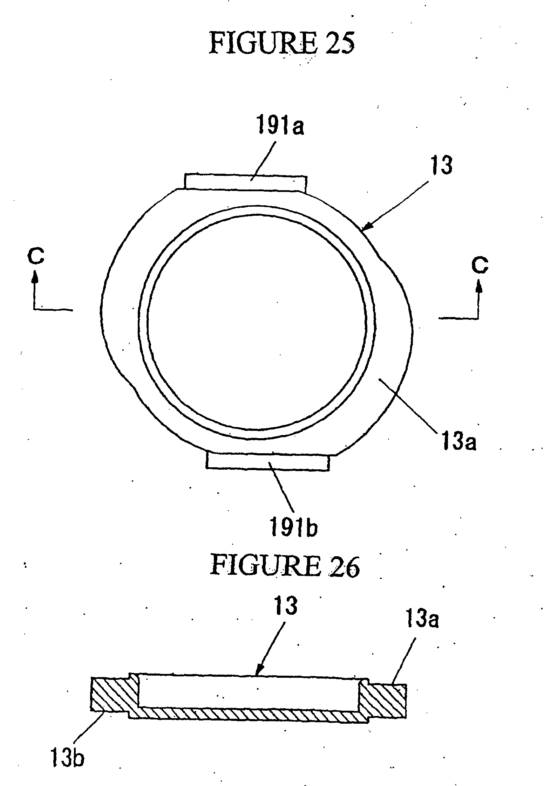

By forming the yoke 13 in the shape shown in figures 25 and 26, one can fix the suspensions 16a, 16b to the extended surfaces 13a, 13b by such means as laser welding. By forming the yoke 13 in the shape shown in figures 25 and 26, the spacer ring 19 and the stop ring 20 are not needed when the suspensions 16a, 16b are fixed in place, and so it is possible to reduce the number of parts and cuts the cost.

Because the lead wires 14a, 14b of the voice coil 14 follow the arc-shaped grooves 10a, 10b along the short side (the Y direction) of the housing 10 to the slit 100c between the terminal seats 100a, 100b, they are emplaced stably, with no danger of wire breakage or peeling of the insulation. In addition, the diaphragm 15 and the cap 18 can be assembled in the usual manner.

With the vibrating actuator device constituted in this way, the electromagnetic circuit E can be installed within the walls of the housing 10 by means of two arms 162a, 162b located in the same space as the short side (the Y direction) of the housing 10. Therefore, the electromagnetic circuit E can be installed even in a roughly rectangular housing 10 that is relatively narrow in one direction.

With this vibrating actuator device and the inverted mounting described above, the contact points that are electrically connected to the power feed lands of the circuit board were located on the diaphragm 15 mounting side, and the flat portions to which the voice coil 14 lead wires are electrically connected were located were the terminal fittings 17a (17b) on the cap 18 mounting side. Also, the lead wires 14a, (14b) of the voice coil 14 that came out from the housing 10 were laid from the diaphragm 3 mounting side to the cap 9 mounting side, and electrically connected to the flat portions of the terminal fittings 17a (17b), one positive and one negative.

The terminal fittings 17a (17b) are made of a thin metallic sheet with good conductivity, such as phosphor bronze or titanium bronze, and as shown in figure 18; it has a box-shaped fitted bend 170 in its center, above which a riser portion 171 maintains a specified interval to the parallel plate portion 172 to which the lead wires are connected. A leaf spring 173 extends downward at a slant from the fitted bend 170 and is then rounded upward with a contact point 174 for connection to the power feed land.

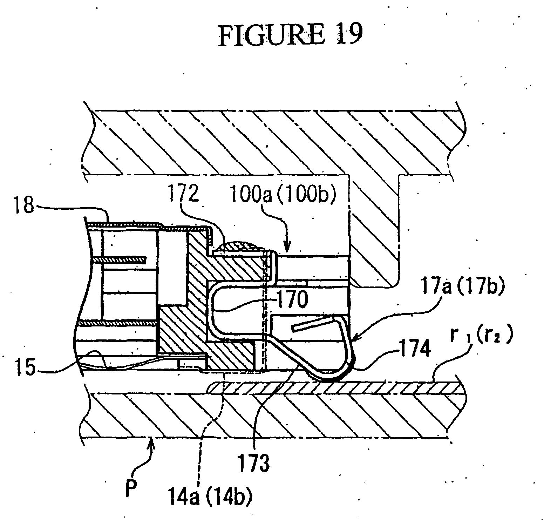

With this terminal fitting 17a (17b), as shown in figure 19, as the contact point 174 is pressed against the power feed lands r1 (r2) on the circuit board P, there is a spring deformation of the contact point 174 and a reliable electrical contact is achieved.

### <Second Example Of Implementation>

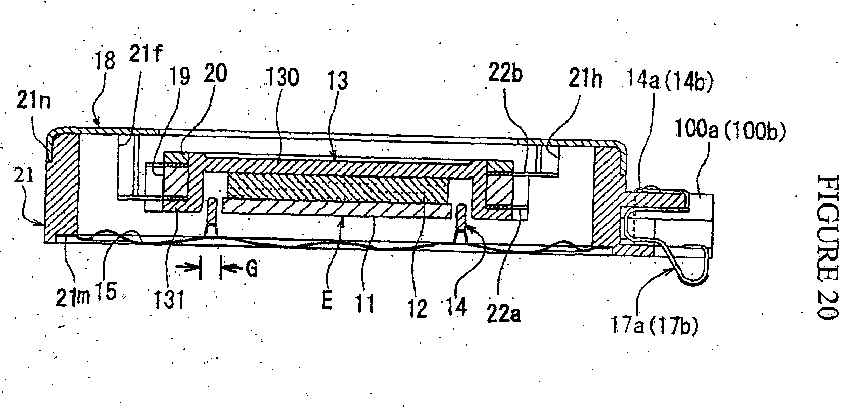

Figures 20 to 24, 2, 3, and 11 to 19 show the vibrating actuator device of the second example of implementation of this invention. The second example of implementation of this invention is explained below. Now, the explanation of the second example of implementation is limited to those points which differ from the first example of implementation; constituent parts that are the same as in the first example of implementation are keyed with the same numbers, and duplicate explanations are omitted or simplified.

The points that differ between the second example of implementation and the first example of implementation are the structure of the housing and the structure of the double suspension.

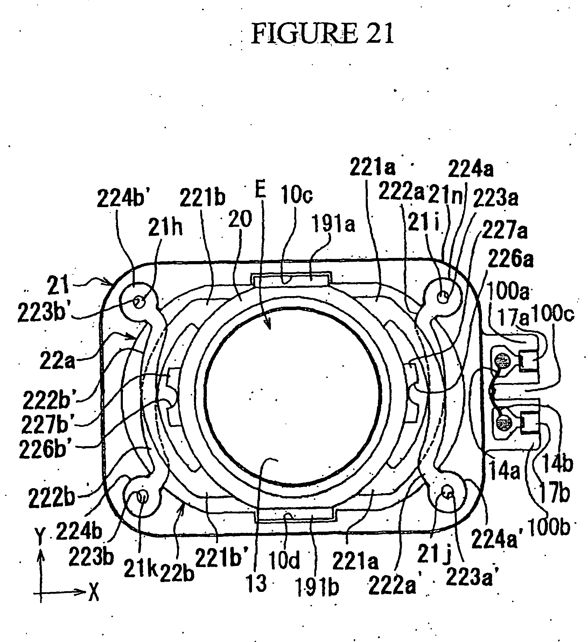

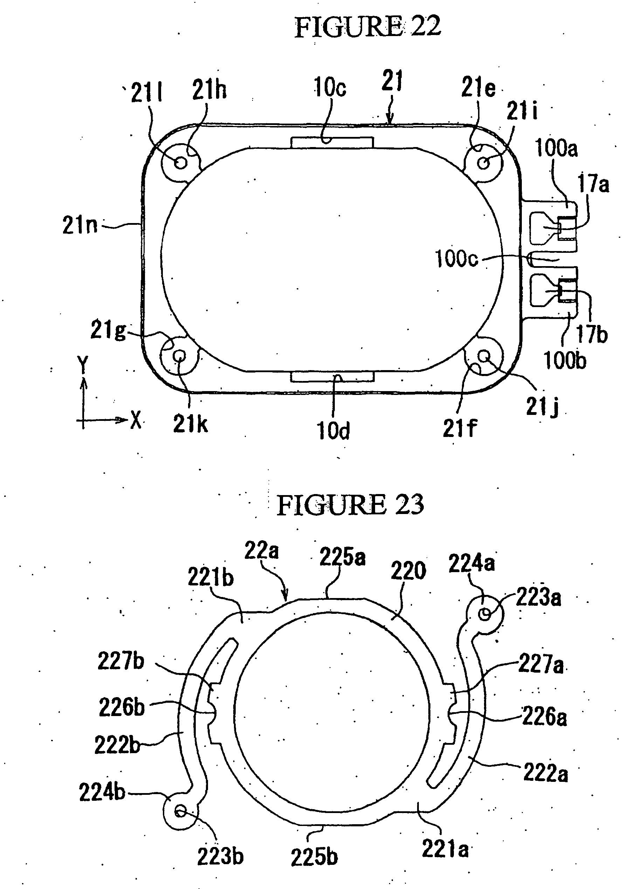

The housing 21 of the second example of implementation, as shown in figures 21 and 22, has four comers (all keyed with the same numbers) located in the narrow space of the housing 21 with suspension attachment seats 21e, 21f, 21g, 21h sunk to different depths (see figure 20) within the walls and stop pins 21i, 21j, 21k, 21l rising from the center of the bottom of each. On the side where the diaphragm 15 is mounted, a step 21m that matches the outer edge is formed on the edge of the walls, and on the other side where the cap 19 is attached, there is a step 2 In on the outer surface of the wall that matches the rising rim of the cap 18.

The suspensions 22a, 22b are , as shown in figure 21, 23, and 24, located in the short side (the Y direction), and attachments 221a, 221b,221a',221b' on outer edges of circular main parts 220, 220' that support the electromagnetic circuit E are equipped symmetric position. Additionally, each of the suspensions 22a, 22b have two arms 222a, 222b, or 222a', 222b' that extend in opposite direction of the circumference of the main parts 220, 220'.

The suspensions 22a, 22b have, in the arm tips 224a, 224b, 224a', 224b', holes 223a, 223b, 223a', 223b' that fit with the stop pins 21i, 2j, 21k, 21l in the seats 21e, 21f, 21g, 21h, by which means they can be installed in the walls in the short side (the Y direction) of the housing 21.

In addition, the suspensions 22a (22b) have linear edges 225a, 225b, 225a', 225b' that are cut on the outer rim to match the projecting pieces of the stoppers on the spacer ring, and semi-circular cutouts 226a, 226b, 226a', 226b' which are positioned by support pins of the assembly jig during assembly of the electromagnetic circuit. Of these, the linear edges 225a, 225b, 225a', 225b' are positioned along the long sides (the X direction) of the housing, and the semi-circular cutouts 226a, 226b, 226a', 226b' are made in the projecting pieces 227a, 227b, 227a', 227' that face the short sides (the Y direction) of the housing.

These parts are assembled firmly on the electromagnetic circuit E, as shown in figure 20 and also in figure 2, by first fitting the suspension 22a around the outside of the receptacle 130 until it is in contact with the outer flange 131 of the yoke 13, then adding the spacer ring 19 and the second suspension 22b in that order, then fitting the stop ring 20 around the outside of the receptacle 130 to hold the second suspension 22b in place, so that the two suspensions are assembled firmly as a single unit between the outer flange 131 of the yoke 13 and the stop ring 20.

When the electromagnetic circuit E is assembled, the arms 222a, 222a', 222b, 222b' are fitted around the receptacle 130 of the yoke 13 by positioning them within the space of the narrow width of the housing 21 facing opposite directions to cross each other, as shown in figure 21,

When the first suspension 22a, spacer ring 19 and second suspension 22b are fitted in order on the receptacle 130 of the yoke 13, support pins of an assembly jig (not illustrated) are used to align the semicircular cutouts 226a, 226b, 193a, 193b (see figure 14) 226a', 226b' on the various structural parts in the proper positions. By this means it is possible to assemble the structural parts while maintaining an even weight balance overall, even if the structural parts are not circular in shape.

When this electromagnetic circuit E is installed within the housing 21, the electromagnetic circuit E is supported by a double suspension structure consisting of two suspensions that are fitted around the outside of the yoke 13 along with the spacer ring 19 and the stop ring 20 as described above, and the tips 224a, 224b, 224a', 224b' of the arms are attached inside the walls of the short sides (the Y direction) of the housing 21 by fitting the holes 223a, 223b, 223a', 223b' of the suspensions 22a, 22b over the stop pins 21i, 21j, 21k, 21l of the seats 21e, 21f, 21g, 21h.

Two suspensions 22a, 22b with different vibration characteristics can be used to prevent the loss of energy by the vibration of the electromagnetic circuit E. With the suspensions 22a, 22b, it is possible to firmly fix the tips 224a, 224b of one pair of arms 222a, 222b, and fix more flexibly the tips 224a,' 224b' of the other pair of arms 222a', 222b'.

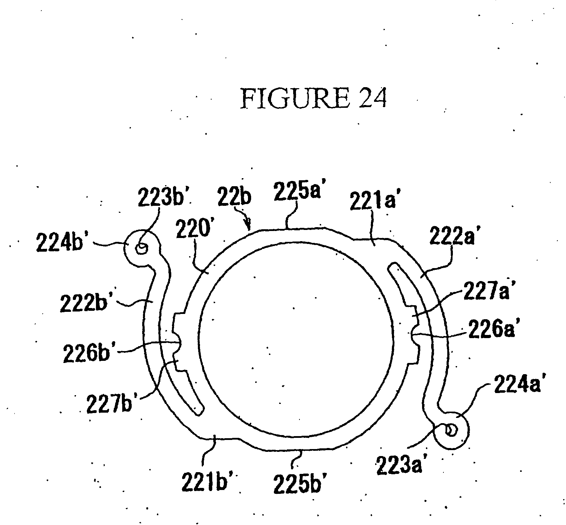

At this stage of assembly of the electromagnetic circuit E, the stoppers 191a, 191b on the spacer ring 19 are accommodated, with a gap, in the concavities 10c, 10d on the inside walls on the long sides (the X direction) of the housing 21. Because the linear edges 132a, 132b (see figure 11), 225a, 225b, 225a', 225b' (see figures 23 and 24), 200a, 200b (see figure 17) are formed on the yoke 13, the suspensions 22a, 22b, and the stop ring 20 corresponding to these projections, the stoppers 191a, 191b can be assembled as designated within the concavities 10c, 10d.

With the vibrating actuator device constituted in this way, the electromagnetic circuit E can be installed within the walls of the housing 21 by means of two arms 222a, 222b, 222a', 222b' located in the same space as the short side (the Y direction) of the housing 21. Therefore, the electromagnetic circuit E can be installed even in a roughly rectangular housing 21 that is relatively narrow in one direction. At the same time, because the arms 222a, 222a', 222b, 222b' positioned within the same space as the short sides (the Y direction) of the housing 21 are assembled in opposite directions crossing each other, the electromagnetic circuit E can be supported with good stability and able to vibrate with good amplitude.

### POTENTIAL FOR INDUSTRIAL USE

As described above, the vibrating actuator device involved in claims 1 to 3 of this invention has a roughly rectangular housing that is relatively narrow in one direction, two suspensions positioned within the narrow space of this housing that each has a main part that supports the electromagnetic circuit with attachments at the outer edge to two arms that extend from the attachments at a gradually increasing distance from the main part, the arms of the two suspensions extending in the same direction and the suspensions being assembled on the electromagnetic circuit. The tips of the arms of each suspension are attached to the walls on the narrow sides of the housing so that the electromagnetic circuit can vibrate by the two suspensions. By this means it is possible to install the electromagnetic circuit and maintain excellent vibration characteristics with good stability, even in a roughly rectangular housing that is relatively narrow in one direction.

The vibrating actuator device involved in claim 4 of this invention has two suspensions with different vibration characteristics, so that it is possible to assemble it without the energy from vibration of the electromagnetic circuit being lost between the arms.

The vibrating actuator device involved in claim 5 of this invention has a housing that is relatively narrow in one direction so that the inner periphery has the shape of a roughly elliptical track and is equipped concave groove that accommodate voice coil lead wire in inner wall on narrow width of the housing, and the voice coil lead wires that extend from the edge of the diaphragm are laid within the concave grooves to connect to the terminal fittings. By this means, it can be assembled with wiring of good stability, there being no breakage of the lead wires or peeling of their insulation.

The vibrating actuator device involved in claim 6 of this invention has two suspensions with a spacer ring between them pressed between the outer flange of the yoke and a stop ring and fixed as a unit to provide an electromagnetic circuit with good structural strength. By this means it can be assembled so as to display excellent vibration characteristics.

The vibrating actuator device involved in claim 7 of this invention has a spacer ring with stoppers to control lateral vibration that project outward from corresponding positions of the periphery, assembled with a yoke, suspensions and a stop ring with linear cuts on the outer edges corresponding to the projecting pieces of the stoppers. The stoppers are accommodated in concavities in the inner wall on the long sides of the housing, allowing assembly of the electromagnetic circuit within the housing. By this means it can be assembled to provide good shock resistance without increasing the width of the housing.

Further, the vibrating actuator device involved in claim 8 of this invention has a yoke and suspensions with matching semi-circular cutouts in their outer edges, and the yoke and suspensions are assembled as the electromagnetic circuit by aligning the cutouts with the support pins of an assembly jig. By this means it is possible to assemble the structural parts while maintaining an even weight balance overall, and to display excellent vibration characteristics.

Further, the vibrating actuator device involved in claim 9 of this invention has a roughly rectangular housing that is relatively narrow in one direction, two suspensions positioned within the narrow space of this housing with arms that extend from in the same directions and faced opposite direction to cross each other, the suspensions being assembled on the electromagnetic circuit. The tips of the arms of each suspension are attached to the walls on the narrow sides of the housing so that the electromagnetic circuit can vibrate in the two suspensions. By this means it is possible to install the electromagnetic circuit and maintain excellent vibration characteristics with good stability, even in a roughly rectangular housing that is relatively narrow in one direction.

The vibrating actuator device involved in claim 10 of this invention has a housing that is relatively narrow in one direction so that the inner periphery has the shape of a roughly elliptical track and the housing is equipped concave groove that accommodate voice coil lead wire in inner wall on narrow width of the housing, and the voice coil lead wires that extend from the edge of the diaphragm are laid within the concave grooves to connect to the terminal fittings. By this means, it can be assembled with wiring of good stability, there being no breakage of the lead wires or peeling of their insulation

The vibrating actuator device involved in claim 11 of this invention has two suspensions with different vibration characteristics, so that it is possible to assemble it without the energy from vibration of the electromagnetic circuit being lost between the arms that cross each other.

The vibrating actuator device involved in claim 12 of this invention has two suspensions with a spacer ring between them pressed between the outer flange of the yoke and a stop ring and fixed as a unit to provide an electromagnetic circuit with good structural strength. By this means it can be assembled so as to display excellent vibration characteristics.

The vibrating actuator device involved in claim 13 of this invention has a spacer ring with stoppers to control lateral vibration that project outward from corresponding positions of the periphery, assembled with a yoke, suspensions and a stop ring with linear cuts on the outer edges corresponding to the projecting pieces of the stoppers. The stoppers are accommodated in concavities in the inner wall on the long sides of the housing, allowing assembly of the electromagnetic circuit within the housing. By this means it can be assembled to provide good shock resistance without increasing the width of the housing.

Further, the vibrating actuator device involved in claim 14 of this invention has a yoke, suspensions and a spacer ring with matching semi-circular cutouts in their outer edges, and the yoke, the suspensions and the spacer ring are assembled as the electromagnetic circuit by aligning the cutouts with the support pins of an assembly jig. By this means it is possible to assemble the structural parts while maintaining an even weight balance overall, and to display excellent vibration characteristics.

## Claims

1. A vibrating actuator device that has a housing in the form of a surrounding wall, an electromagnetic circuit with a magnetic gap between a pole piece and a yoke that holds a magnet that is integral with the pole piece, a diaphragm with a voice coil attached to its inner surface, a pair of facing leaf-spring suspensions that support the electromagnetic circuit that are set inside wall of the housing such that the electromagnetic circuit is able to vibrate, the diaphragm being set inside the wall of the housing such that the voice coil is inserted into the magnetic gap and is electrically connected to terminal fittings outside the wall of the housing by lead wires that lead out of the housing,
in which there is a rectangular housing that is narrower in one direction, each of the suspensions having two arms that are located in the narrow space of the housing and the suspensions attach with main part that supports the electromagnetic circuit and the arms that extend gradually outward from attachment on the main part of the suspension, with the suspensions assembled on the electromagnetic circuit with their arms extending in the same directions and tips of the two arms of each suspension set the walls of narrow width of the housing, such that the electromagnetic circuit can vibrate in the two suspensions.

2. A vibrating actuator device as described in claim 1 above, in which the suspensions are attached to the electromagnetic circuit with the same direction of extension for the arms of the two suspensions and the arm attachments in facing positions, and with the tips of the two arms of each suspension set in seats near the comers of the sides of the narrow widths of the housing, such that the electromagnetic circuit can vibrate in the two suspensions.

3. A vibrating actuator device as described in claim 1 above, in which the suspensions are attached to the electromagnetic circuit with the same direction of extension for the arms of the two suspensions and the arms of the two suspensions offset in degree of rotation relative to a perpendicular centerline through the suspension, and with the tips of the arms of the two suspensions set in different positions in the narrow walls of the housing, such that the electromagnetic circuit can vibrate in the two suspensions.

4. A vibrating actuator device as described in any of claims 1 to 3 above, in which there are two suspensions having different vibration characteristics.

5. A vibrating actuator device as described in any of claims 1 to 4 above, that has a housing that is narrower in one direction with a roughly elliptical, track-shaped inner wall, with grooves in the edge of the narrow wall of the housing to accommodate the lead wires of the voice coil and the voice coil lead wires from the edge of the diaphragm being laid in the grooves and connected to the terminal fittings.

6. A vibrating actuator device as described in any of claims 1 to 5 above, that has a yoke that comprises a flat elliptical receptacle with a U-shaped cross section within which is a magnet that is fixed to and integral with a pole piece and a peripheral flange that extends out from the open edge of the receptacle; two suspensions each formed of a circular main part and two arms, which are fitted around the outer periphery of the receptacle in the order of first suspension, spacer ring, and second suspension, after which a stop ring is fitted over the receptacle to hold the second suspension in place to form an electromagnetic circuit assembled as a unit with the outer flange of the yoke, the stop ring and two suspensions.

7. A vibrating actuator device as described in claim 6 above, in which the electromagnetic circuit is assembled in the housing by assembling a spacer ring that projects stopper outward from the position corresponding to the outside, and the stopper used to control lateral vibration together with the yoke, the suspensions, and the stop ring with linear edges on the outer edge corresponding to the projection base of the stopper; and then accommodating the stopper of the spacer ring in a concavity in the inner surface of the wall on the long side of the housing.

8. A vibrating actuator device as described in claim 6 or 7 above, in which the electromagnetic circuit has a spacer ring and a yoke with matching semicircular cutouts on the outer edges, and is assembled by determining the position with the support pin of an assembly jig that fits the cutout edges of the yoke and spacer ring, and placing the suspensions and the spacer ring around the yoke.

9. A vibrating actuator device that has a housing in the form of a surrounding wall, an electromagnetic circuit with a magnetic gap between a pole piece and a yoke that holds a magnet that is integral with the pole piece, a diaphragm with a voice coil attached to its inner surface, a pair of facing leaf-spring suspensions that support the electromagnetic circuit that are set inside wall of the housing such that the electromagnetic circuit is able to vibrate, the diaphragm being set inside the wall of the housing such that the voice coil is inserted into the magnetic gap and is electrically connected to terminal fittings outside the wall of the housing by lead wires that lead out of the housing,
in which there is a housing that is narrower in one direction, two suspensions having main part that supports the electromagnetic circuit and attachment on the main part and two arms that are located in the narrow space of the housing, and the attachments attached symmetrically on the main part and the arms that extend outward from the attachment on the main part of the suspension in opposite directions, and the suspensions assembled on the electromagnetic circuit with their arms crossing in opposite directions and the tips of the two arms of each suspension set in the narrow walls of the housing, such that the electromagnetic circuit can vibrate in the two suspensions.

10. A vibrating actuator device as described in claim 9 above, that has a housing that is narrower in one direction with a roughly elliptical, track-shaped inner wall, with grooves in the edge of the narrow wall of the housing to accommodate the lead wires of the voice coil and the voice coil lead wires from the edge of the diaphragm being laid in the grooves and connected to the terminal fittings.

11. A vibrating actuator device as described in claim 9 or 10 above, in which there are two suspensions having different vibration characteristics.

12. A vibrating actuator device as described in any of claims 9 to 11 above, that has a yoke that comprises a flat elliptical receptacle with a U-shaped cross section within which is a magnet that is fixed to and integral with a pole piece and a peripheral flange that extends out from the open edge of the receptacle; two suspensions each formed of a circular main part and two arms, which are fitted around the outer periphery of the receptacle in the order of first suspension, spacer ring, and second suspension, after which a stop ring is fitted over the receptacle to hold the second suspension in place to form an electromagnetic circuit assembled as a unit with the outer flange of the yoke, the stop ring and two suspensions.

13. A vibrating actuator device as described in claim 12 above, in which the electromagnetic circuit is assembled in the housing by assembling a spacer ring that projects stopper outward from the position corresponding to the outside, and the stopper used to control lateral vibration together with the yoke, the suspensions, and the stop ring with linear edges on the outer edge corresponding to the projection base of the stopper, and then accommodating the stopper of the spacer ring in a concavity in the inner surface of the wall on the long side of the housing.

14. A vibrating actuator device as described in claim 12 or 13 above, in which the electromagnetic circuit has a spacer ring, suspensions and a yoke with matching semicircular cutouts on the outer edges, and is assembled by determining the position with the support pin of an assembly jig that fits the cutout edges of the yoke, the suspensions, and spacer ring, and placing the suspensions and the spacer ring around the yoke.
